Europäisches Patentamt

European Patent Office

Office européen des brevets

(19)

(11) Veröffentlichungsnummer: **0 099 469**
**B1**

(12) **EUROPÄISCHE PATENTSCHRIFT**

(45) Veröffentlichungstag der Patentschrift:
**16.08.89**

(21) Anmeldenummer: **83105772.4**

(22) Anmeldetag: **13.06.83**

(51) Int. Cl.⁴: **H 04 N 1/23,** H 04 N 7/08,
G 09 G 1/16, G 06 F 3/153,
G 06 K 15/00

(54) Schaltungsanordnung für die bildliche Darstellung von Texten, Grafiken und Symbolen auf Bildschirmen von Monitoren und/oder mittels punktgesteuerter Drucker.

(30) Priorität: 24.06.82 DE 3223489
29.10.82 DE 3240141

(43) Veröffentlichungstag der Anmeldung:
01.02.84 Patentblatt 84/5

(45) Bekanntmachung des Hinweises auf die Patenterteilung:
16.08.89 Patentblatt 89/33

(84) Benannte Vertragsstaaten:
AT BE CH DE FR GB IT LI NL SE

(56) Entgegenhaltungen:
EP-A- 0 012 858
FR-A- 2 492 618

ELECTRONIQUE INDUSTRIELLE, Nr. 21, 1. Oktober
1981, Seiten 33-36, Paris, FR; PH. LAMBINET:
"Réalisation d'un terminal graphique autour du
processeur intégré EF9365"

(73) Patentinhaber: **LOEWE OPTA GMBH,**
**Industriestrasse 11 Postfach 220, D-8640 Kronach (DE)**

(72) Erfinder: **Missbach, Hilmar, Dipl.-Ing., Querstrasse 3,**
**8640 Kronach (DE)**

**Beschreibung**

Die Erfindung betrifft eine Schaltungsanordnung zur Darstellung von Texten, Grafiken und Symbolen auf Bildschirmen von Monitoren und/oder mittels punktgesteuerter Drucker nach dem Oberbegriff des Patentanspruchs 1.

Es ist bekannt, den Fernsehempfänger in Verbindung mit dem Telefon und einer bei der Post installierten Informationszentrale für neue Kommunikationsmöglichkeiten in Form der Darstellung von Texten und Grafiken zu benutzen, wobei über die Telefonleitung die Textinformation digitalcodiert übertragen werden. Darüber hinaus ist es bekannt, Textinformationen während der Vertikalaustastlücken des Fernsehsignals mit zu übertragen und diese über einen eigenen Decoder im Fernsehempfangsgerät so aufzubereiten und seitenmäßig zwischenzuspeichern, daß sie auf dem Bildschirm wiedergegeben werden können. Die bekannten Systeme sind beschrieben in der «NTZ», Band 34, 1981, Heft 11, Seiten 776 bis 780. Die im Versuch oder bereits eingeführten in- und ausländischen Systeme sind: Teletel, Prestel, Captain und die deutschen Bildschirmtext- und Videotextsysteme.

Das englische System Prestel ordnet jedem Ort auf dem Bildschirm eine Adresse im Bildwiederholspeicher zu. Der Inhalt der Speicheradresse wird in einem Lesespeicher (ROM) decodiert und liefert die Zeichenauflösung auf dem Bildschirm bzw. interpretiert ein Attribut (Darstellungsmerkmal wie z.B. Farbe, Blinken) in einem Wort- oder Zeichenzwischenraum, welches dann für den Rest der darzustellenden Reihe bis auf Widerruf gilt. Der Übertragungscode wird praktisch in dem Bildwiederholspeicher abgelegt. Systembedingt ist nur ein geringer Zeichenvorrat (94 Zeichen) und die Beschränkung auf nur ein Attribut in dem Zwischenraum möglich. Dadurch hält man den Speicher mit 1 k × 7 bit zwar klein, der Spielraum der Darstellungsmöglichkeit ist jedoch sehr eingeengt.

Im französischen System Teletel ist das Attribut einem Cursor zugeordnet und springt mit dem Cursor unabhängig von den Reihen mit, daher auch parallel oder cursororientiert genannt. In jedem Fall sind derartige Attribute notwendig, um verschiedene Darstellungsformen zu ermöglichen. Diese reichen über die Hintergrundfarben, Darstellungsfarben, Zeichengröße bis hin zur Blinkanzeige einzelner Zeichen. Die beiden anderen Systeme gestatten weitere aufgelöste Darstellungen.

Für die europäische Norm – «Specification of a Basic Videotex Terminal operating to the European Videotext Service», herausgegeben vom FTZ, Darmstadt, FTZ T-24-1, April 82 – wurde ein Zeichenvorrat festgelegt, der mehr als 542 Zeichen umfaßt. Ferner wurde festgelegt, daß die Attribute, wenn möglich, ohne Zwischenraum geschaltet werden können. Die zu verwendenden Zeichen sind folgende: 320 Zeichen nach ISO 6937 und ISO DIS 2022/81, 64 Block Graphics, 64 Smooth Graphics, 188 DRCS-Zeichen und 32 Lined Graphics. Insgesamt benötigt man zur Darstellung sechs Tabellen zu je 128 Zeichen bzw. Symbolen mit zwei Reservetafeln z.B. für nicht auf der lateinischen Schrift basierende Sprachen.

Mit der Einführung der unter dem Begriff «Kompositionsmethode» bekannten Standardisierung mit der Möglichkeit, mehrere Attribute ohne Zwischenraum zu schalten, ist der Speicherinhalt des Bildwiederholspeichers nicht mehr ohne weiteres für Drucker und Cassettenrecorder lesbar, da eine terminalspezifische Codeverdichtung vom Übertragungscode zum Bildwiederholspeicher stattfinden muß.

Eine Lösung für einen Bildschirmtextdecoder ist in der zitierten Literaturstelle beschrieben. Dadurch wird wegen des geringen Nutzungsgrades der Bildwiederholspeicherkapazität von mehr als 1 k × 32 bit der Speicher zweigeteilt. Ein Speicher 1 k × 8 bit dient als Bildwiederholspeicher, in dem jede Adresse einem Ort auf dem Bildschirm zugeteilt ist. Ein zweiter Speicher wird dem ersten bei Gebrauch zugeteilt, d.h. es findet eine dynamische Zuteilung von Speicherplätzen statt. Der erste Teil des Speichers enthält 7 bit für die Darstellung der Zeichen und 1 bit als Zeiger (Pointer), der anzeigt, ob Zusatzinformationen an dieser Stelle auf dem Bildschirm benötigt werden, z.B. Attributsänderungen oder ein anderer Zeichenvorrat $C_6\ C_5\ C_4\ C_3\ C_2\ C_1\ C_0\ Z$.

Der zweite Teil des Speichers enthält nur die Zusatzinformation. Um den Codierungsaufwand klein zu halten, ist eine einfache Datenstruktur vorgeschlagen worden: $a_2\ a_1\ a_0\ b_3\ B_2\ B_0\ Z$, wobei ein Teil $a_0$ bis $a_2$ die Datenstruktur und ein anderer Teil $b_0$ bis $b_3$ die Attribute, Zeichensätze usw. definieren. Durch Setzen des Zeigen-bits kann man beliebig viele Daten dieser Art zusammenkoppeln und damit beliebig viele Änderungen an einer Stelle auf dem Bildschirm hervorrufen, höchstens jedoch 40 Änderungen pro Reihe (Zeichenblock). Die nachfolgende Tabelle veranschaulicht die Speicherstruktur.

| $a_2$ | $a_1$ | $a_0$ | $b_3$ | $b_2$ | $b_1$ | $b_0$ | |
|---|---|---|---|---|---|---|---|
| 0 | 0 | 0 | S | S | S | t | S: 8 Tafeln zu je 128 Zeichen |
| | | | | | | | t: Dauerumschaltung |
| 0 | 0 | 1 | R | G | B | I | Fordergrundfarbe, reduzierte[1] Intensität |
| 0 | 1 | 0 | R | G | B | I | Hintergrundfarbe[1], reduzierte Intensität |
| 0 | 1 | 1 | DH | DW | d | e | Doppelte Höhe, Doppelte Breite[2] |
| 1 | 0 | 0 | a | a | b | b | Blinken, verschiedene Moden |
| 1 | 0 | 1 | Inv. | x | Unt. | x | Invertieren, Unterstreichen |
| | | | | | | | d, e reserviert für Terminalbefehle |

| $a_2$ | $a_1$ | $a_0$ | $b_3$ | $b_2$ | $b_1$ | $b_0$ | |
|---|---|---|---|---|---|---|---|
| | | | | | | | x: don't care |
| 1 | 1 | 0 | y | y | y | z | y: 8 einzelne Attribute |
| | | | | | | | z: set/reset |
| 1 | 1 | 1 | w | w | w | z | weitere Reserve, z.B. für Terminal-Statusmeldungen |

[1] Reduzierte Intensität mit Schwarz ergibt Transparent

[2] Vier Zeichengrößen werden angezeigt: doppelte Höhe, doppelte Breite, doppelte Größe, Normalgröße

Als nachteilig hat sich herausgestellt, daß der Speicherraum begrenzt bleibt, aber der Speicherbedarf größer ist. Beim Überschreiben mit neuen Informationen muß der ganze Speicher reorganisiert werden. Dies hat insbesondere Nachteile beim rollenden Verfahren, dem sogenannten «Scrolling-Verfahren», wo einzelne Zeichenblöcke ausgetastet und neu eingeschrieben werden, z.B. bei der Darstellung von Fahrplänen, die über eine Bildschirmtextzentrale abgerufen werden. Die Folgen sind, daß bei diesem Konzept Kompromisse geschlossen werden müssen, die auch definiert werden müssen. Die Reorganisation des Speichers erfordert erhöhten Rechenaufwand und damit Rechenzeit. Man beschränkt daher die dynamische Zuteilung von Speicherplätzen auf 40 Byte pro Reihe, d.h. 40 Attribute und Zeichensatzänderung können nur pro Reihe durchgeführt werden.

Ein anderes flexibleres System, bei dem jedes beliebige Zeichen einer gegebenen Zeichencodierung zugeordnet werden kann, vorausgesetzt, daß das Zeichen mittels einer Punktmatrix dargestellt werden kann, üblicherweise wird ein 7 × 5 Punkte Matrix oder 9 × 5, 10 × 6 oder 10 × 7 Matrix verwendet, ist in der DE-A-2 651 672 beschrieben. Der Bildschirmtextdecoder weist eine Decodiervorrichtung auf, welche auf digitale Zeichencodierungen anspricht und codiert Bytes abgibt, die durch die Anzeigevorrichtung zur Darstellung gewählter Punkte einer Punktematrix verwendbar sind. Die Anordnung beinhaltet: ein Seiten-RAM oder Zeichen-ROM zum Vergleichen der Zeichen, die im Zeichen-RAM gespeichert sind. Jedem Zeichen ist eine Steuercodierung zugeordnet, wobei die Gruppe der Digitalcodierungen eines Zeichens als solche dargestellt wird und sich auf die entsprechenden Punkte der Matrix bezieht. Das Abrufen der einzelnen Punkte und die Änderung der Attribute der einzelnen Punkte ist nicht möglich.

Der in der betreffenden Schrift beschriebene Bildschirmtextdecoder weist bereits Elemente auf, die der neueren Norm im weitesten Sinne entsprechen würden. Allerdings sind hier keine Wege aufgezeigt, um eine gesonderte Attribut-Abspeicherung und -Auswertung zu ermöglichen, wie sie mit dem vorher beschriebenen System ermöglicht und verlangt werden.

Da das System außerdem zielorientiert ist, d.h. sämtliche punktbezogenen Digitalcodierungen eines Zeichens gemeinsam dargestellt werden müssen, ist das System ebenfalls nur auf eine bestimmte Anzahl Zeichen, die abgespeichert werden können, beschränkt.

Aus der DE-C-2 855 731 ist ein Verfahren zur farbigen Darstellung von Informationen auf einem rasterweise abgetasteten Medium bekannt, bei welchem in einem ersten Schritt aus einem ersten Speicher durch Zuführung einer Folge von jeweils mehrere Bits umfassenden Adressen von Bitgruppen enthaltenden Speicherplätzen folgenweise Gruppen von Datenbits ausgelesen werden, von denen jede die Leuchtdichte einer Gruppe von Punktelementen der dargestellten Informationen angibt, derart, daß die Bits der Leuchtdichteinformation innerhalb der Folge ausgelesener Datenbitgruppen in ein in mehreren Zeilen auf dem Medium liegendes Muster entsprechender Punktelemente umwandelbar ist, und bei dem in einem zweiten Schritt aus einem zweiten Speicher durch Zuführung der Adressenfolge Farbdaten für Farben ausgelesen werden, in welchen eine entsprechende Gruppe von Punktelementen des Musters wiedergegeben werden sollen, wobei eine Adressensteuerung zum Laden des Datenspeichers und ein die Attribute aufnehmender Hilfsspeicher vorgesehen ist. Der Hilfsspeicher weist eine wesentlich kleinere Speicherplatzanzahl auf als der Datenspeicher und liefert nur aufgrund eines Teils der Bits jeder folgenweise zugeführten Adresse Farbinformationen. Die Zeilenlänge jedes Untermusters ist durch in einer oder mehreren Leuchtdichtedaten-Bitgruppen enthaltene Bits bestimmt und kürzer als eine volle Zeile von Punktelementen des Gesamtbildes. Die Höhe jeder Untergruppe umfaßt mehr als eine Zeile von Punktelementen, derart, daß bei unmittelbarer Erzeugung des Musters aus den folgenweise auftretenden Leuchtdichteinformationsbits die betreffenden Untermuster aus den folgenweise auftretenden Farbdaten in den ausgewählten Farben mit geringerer Auflösung als das Leuchtdichtepunktemuster unmittelbar erzeugt werden. Beim Fehlen von Bitelementen werden wiederzugebende Hintergrunddaten geliefert. Eine TV-Interface-Schaltung sorgt für die bildsynchrone Wiedergabe der darzustellenden Daten auf dem Bildschirm. Durch diese Aufteilung der adressierten Ablage der punktorientierten Daten und der Farbattribute in einem Hilfsspeicher ist die Farbwiedergabe mittels der Bitmapping-Technik möglich, wobei der Hilfsspeicher für die Farbinformationen wesentlich weniger Speicherplätze aufweisen kann als der erste Speicher für die Leuchtdichteinformation der wiederzugebenden Informationen. Die Abarbeitung der Leistungsmerkmale des Bildschirmtextdienstes eingangs genannter Art ist hiermit jedoch nicht möglich.

Weiterhin ist aus der DE-C-2 839 888 zur Bildfeldvariation ein Adressenrechner bekannt, der die Adressen für eine gewählte Betriebsphase speichert und zur Änderung modifiziert. Mit dieser Vorrichtung soll es möglich sein, nur einen Teil des auf dem Bildschirm dargestellten Bildes mittels eines Verschiebeschalters wahlweise zu verschieben, wobei der restliche Teil bestehen bleibt.

Aus der US-A-4 200 847 sind ein System und ein Verfahren zur Darstellung von farbigen Bildschirmbildern unter Anwendung eines synthetischen Farbgenerators bekannt, bei dem mittels einer Handsteuerung Bilder auf dem Bildschirm darstellbar sind. Durch zusätzliche Wahl der Grundfarbenkomponenten können der Darstellung Farben zugeordnet und in einem Farbspeicher abgelegt werden. Die aufgezeichneten Bilder werden unter der zugeordneten Farbe wiedergegeben.

Die Übertragung der Bilder und der zugeordneten Farbdaten erfolgt von einer Mikroprozessorsteuereinheit während der Vertikalaustastzeit, so daß es bei der Bildwiedergabe zu keinen Störungen kommt.

Dieses System geht von der Darstellungsmöglichkeit eines farbigen Bildes auf einem Bildschirm aus. Das Bild wird quasi editiert, die Abarbeitung bestimmter Protokolle ist hier nicht notwendig. Den gezeichneten Flächen werden bestimmte Farben zugeordnet. Ein direkter Farbzugriff vom Bildspeicher erfolgt dabei. Eine Aufbereitung, wie sie für die Darstellung von Texten und graphischen Symbolen, z.B. nach dem Bildschirmtext-Standard, erforderlich ist, ist mit einer solchen Anordnung nicht möglich. Auch ist der Schrift nicht zu entnehmen, in welcher Weise die verschiedenen Leistungsmerkmale adressiert werden sollen.

Sowohl aus der FR-A-2 492 618 als auch aus der DE-A-3 141 234 ist eine Farbinformations-Anzeigeanordnung bekannt, bei der für die auf einem Bildschirm anzuzeigende Information jeweils Pattern- oder Codedaten sowie Farbdaten herangezogen werden. Für die Speicherung dieser Daten dient ein gemeinsamer Speicher, der in integrierter Schaltungstechnik ausgeführt ist und durch unterschiedliche Adressen adressierbar ist.

Der eine Speicherbereich dient zur Speicherung der Pattern- oder Codedaten, und der andere Speicherbereich dient zur Speicherung der Farbdaten. Mit dem Speicher ist eine Adressenauswahlreinrichtung verbunden, welche die ihr zugeführten Adressen zur Adressierung von Pattern- oder Codedaten und zur Adressierung von Farbdaten lediglich nacheinander an den Speicher abgibt. Mit der Datenausgangsstelle des Zählers sind individuell freigebbare Zwischenspeicher verbunden, die ausgangsseitig mit der Ansteuerschaltung (36, 372) eines Anzeigegerätes verbunden sind.

Nach diesem System werden Muster- oder Codedaten für jeweils einen Zeichenplatzbereich mit adressierten Farbcodes abgespeichert und für die Darstellung gleichzeitig ausgelesen. Der Farbcode ist dabei für jeden Unterblock festgelegt und nicht einem einzelnen Darstellungspunkt zugeordnet.

Weiterhin ist aus der EP-A-12 858 ein Thermodrucker als Videodrucker bekannt, bei welchem seriell die Zeileninformationen punktweise in einem Pufferspeicher eingeschrieben und aus diesem von der Druckersteuereinheit ausgelesen und dem Druckkopf zugeführt werden.

Der Erfindung liegt die Aufgabe zugrunde, unter Vermeidung der aufgezeigten Nachteile bekannter Systeme einen Bildschirmtextdecoder mit hoher Performance und hoher Flexibilität zu erstellen, ohne sich einer Zeiger-Bit-Verknüpfung zwischen Zeichen- und Attributspeicher zu bedienen, wobei sichergestellt sein soll, daß jeder einzelne Punkt eines aus dem Punktmuster aufgebauten Zeichens auf dem Bildschirm individuell ansteuerbar und farbig auslegbar ist, daß jedem dieser Punkte eine eigene Information (z.B. doppelte Schriftgröße) zur Erfüllung des eingangs beschriebenen Bildschirmtext-Standards (CEPT) zugeordnet werden kann, wobei zur Verknüpfung der Abarbeitungszeit für die Zeichendarstellung fester Zeichen in einem Zeichenblock (Zeichen mit Hintergrundfarbe) die vorgegebenen Vorder- und Hintergrund-Farbinformationen und sonstigen Zeichenblockattribute in einem Attributspeicher ablegbar sind, die Zeicheninformationen selbst hingegen in dem Punktspeicher, und daß ferner eine rollende Textwiedergabe (Scrolling) einzelner Textreihen ermöglicht wird, ohne daß die gesamte Seite neu abgespeichert werden muß, wodurch der Rechenaufwand (Zeit) für die Reorganisation der gespeicherten Daten verringert werden soll. Angestrebt ist ferner eine besonders einfache Art des Bildschirmtext-Decoders, der die Leistungsmerkmale des eingangs beschriebenen Bildschirmtext-Standard (CEPT) in einer besonders kurzen Zeit für die Textdarstellung abarbeitet und alle Leistungsmerkmale im Hinblick auf die individuelle Darstellung der Zeichen und Zeichenpunkte erfüllt, wozu die Darstellungsinformation von verschiedenen Speichern abrufbar sein soll. Außerdem sollen die Bildschirmtexte, wie sie von den neuen Kommunikationsdiensten angeboten werden, nicht nur auf dem Bildschirm darstellbar sein, sondern auch mittels punktgesteuerter Matrix-Drucker auf sichtbaren Aufzeichnungsträgern, wie Papier, Folie u.dgl., und zwar sowohl in Verbindung mit einem Monitor als auch unabhängig hiervon.

Die Aufgabe wird erfindungsgemäß nach der im Patentanspruch 1 wiedergegebenen technischen Lehre gelöst.

Vorteilhafte Ausbildungen der Schaltungsanordnungen für die Darstellung der Information auf einem Bildschirm sind in den Unteransprüchen 2 bis 8 beschrieben, bevorzugte Weiterbildungen zur Darstellung mittels eines Punktdruckers in den Ansprüchen 9 bis 11.

Ein Bildschirmtextdecoder nach der Erfindung unterscheidet sich von bekannten Bildschirmtextdecodern dadurch, daß er die punktorientierte Ablage eines jeden einzelnen Punktes eines Zeichens nach Maßgabe von Attributen und Unterattributen bzw. direkten Farbzuordnungen ermöglicht, wobei die in dem entsprechenden Schreib/Lese-Speicher (RAM) gespeicherten Informationen punktweise ausgelesen und direkt oder über einen Farbenspeicher, der die Informationen bezogen auf jeden einzelnen Punkt festhält, an eine Matrixschaltung zur Darstellung auf einem Display, einem Bildschirm eines Monitors oder Farbfernsehempfängers abgegeben werden.

Dadurch ist es praktisch möglich, jeden einzelnen Punkt eines Zeichens anders darzustellen und die Zeichenblöcke mit anderen Attributen zu belegen, z.B. mit verschiedenen Hintergrundfarben. Eine zeichenmäßige Umsetzung z.B. über einen Charaktergenerator oder ein Schreiben der Zeichen blockweise erfolgen nicht sondern lediglich die punktweise Darstellung einer jeden Zeile. Der Bildschirmtextdecoder ermöglicht eine Vielzahl von Darstellungsformen der Zeichen bedingt durch die punktmäßige Ablage der Zeicheninformationen und der zugehörigen Zeichenblock-Attribute. Dies führt zu folgenden ergonometrischen Vorteilen:

Höhere Bildwechselfrequenz (z.B. flimmerfreie 75 Hz), Texte mit höherer Zeilenzahl pro Zeichen, 20 Textzeilen pro Bild, 960 verschiedene fernladbare Zeichen (DRCS-Zeichen, NTZ 1981, Heft 11, Seiten 779 und 780) unabhängig vom Mode, d.h., ein vollständiges Bildformat mit DRCS-Auflösung ist darstellbar, die Übertragung erfolgt mit Mehrblattseiten und der Einsatz eines Lichtgriffels z.B. zum Editieren von DRCS-Zeichen, Positionierung 25 Textzeilen für zusätzliche Informationen, z.B. Wechselbeschriftung einer Tastenreihe oder Vorgabe für den Lichtgriffel. Darüber hinaus sind weitere Funktionen möglich, die bei dem Bildschirmtextsystem europäischer Norm unmittelbar nicht vorgesehen sind.

Vergrößertes Zeichenrepertoire zusätzlich spezifischer Sonderzeichen, z.B. mathematische Zeichen, Symbole, japanische Schriftzeichen usw., Texte mit 80 Zeichen je Textzeile. Die Übertragung erfolgt bei Bildschirmtext mit zwei Blattseiten, erhöhter Zeilenzahl, z.B. Faktor 1,6 ohne Speichererweiterung. Eine Umstellung auf andere Standards, z.B. Antiope, Teleton durch Software-Umstellung des Mikroprozessors ist auf einfache Weise durchführbar.

Der Bildschirmtextdecoder kann mit hochintegrierten Standardbauelementen verwirklicht werden (Mikrocomputer-ROMS, statische und dynamische RAMS, CRT-Controller). Durch die punktorientierte Struktur des Display-Bereiches wird eine hohe Systemflexibilität erzielt. Der vorgesehene CRT-Controller kann auf verschiedene Display-Formate programmiert werden. Der ROM-Bereich für die Eingabe der einzelnen Zeichen ist zur Programmerweiterung bis zu 64 kB ausbaubar. Der als Seitenspeicher vorgesehene RAM-Bereich ist zur Mehrseitenspeicherung ebenfalls zu 64 kB ausbaubar. Die Anzahl der abgelegten Seiten ist abhängig von deren Komplexität. Speicher mit 2 k × 8 Organisation können verwendet werden, auch nichtflüchtige Speicher und Festwertspeicher. Ein besonderer wirtschaftlicher Vorteil gegenüber einem zeichenorientierten Konzept liegt darin, daß das punktorientierte System nach der Erfindung mit nur ca. 70 herkömmlichen integrierten Schaltungen gegenüber 300 verwirklicht werden kann.

Die Kernzelle des Bildschirmtextdecoders nach der Erfindung ist ein dynamischer Schreib/Lese-Speicher (RAM), der punktorientiert ist, d.h. jeder Speicherzelle ist ein Punkt eines aus einem Punktmuster gebildeten Zeichens mit der dazugehörigen Farbe für die Darstellung auf dem Bildschirm zugeordnet. Daneben ist ein parallel adressierter Attributspeicher vorgesehen, der aus Kapazitätsgründen zweckmäßigerweise aus statischen RAMS aufgebaut ist. In diesem sind die Attributdaten für einen kompletten Zeichenblock, wie z.B. Farbe des Hintergrundes, verschiedene Blinkfrequenzen, Unterscheidung des DRCS-Modes, abgelegt. Punktspeicher und Attributspeicher stehen bei der Abarbeitung der Zeichenblockdaten in Wechselbeziehung. Sind unter einer Adresse Attributdaten abgespeichert, die für alle Darstellungspunkte eines Zeichenblocks gelten, so sind im Punktspeicher unter den zugeordneten Unteradressen praktisch nur Schaltbefehle abgelegt. Sind hingegen jedem Darstellungspunkt abweichende oder zusätzliche Attribute zugeordnet, so werden diese im Punktspeicher abrufbar mit abgelegt. In Abhängigkeit von den jeweiligen Daten (Schaltfunktionen, punktbezogene Darstellungsattribute) wird ein Multiplexer gesteuert, über den die Daten entweder aus dem Punktspeicher oder aus dem Attributspeicher punktbezogen ausgelesen werden. Diese bilden die Adresse für den Farbenspeicher.

Für die Wiedergabe nach dem Scrolling-Verfahren, bei dem einzelne Zeichenreihen ausgeblendet und andere eingeschrieben werden, wäre das System zu langsam. Dies wird durch den erfindungsgemäßen zusätzlichen Adressierspeicher, der aus einem statischen RAM aufgebaut ist, behoben, da beim Einlaufen neuer Daten nicht der ganze Speicherbereich des dynamischen RAM geändert werden muß. Die zu ändernden Adressen werden im Adressierspeicher geändert und Daten aus dem Punktspeicher der geänderten Adresse und dem Attributspeicher entsprechend und der Unteradressen gelöscht und neue eingeschrieben.

Die Adressierung über eine Adressenlogik ist dann erforderlich, wenn die Speicher nicht parallel, sondern nur seriell adressiert werden können. Adressiert werden die Speicher jeweils während der Vertikalaustastzeit über einen Adreß-Multiplexer. Die anzusteuernden Speicher werden zweckmäßigerweise über einen Chip-Selektor aktiviert. Bei Wahl einer geeigneten Software und Anpassung der Hardware kann die Adressierung jedoch auch ohne vorherige Speicherselektion erfolgen.

Der Mikroprozessor gibt die zeichenbezogenen Adressen und Attributdaten nach bekannten Verfahren mittels eingeschriebenen Programmen ermittelt aus. Diese gelangen über einen Adreßbus und einen Datenbus an die entsprechenden Speicher und werden an den adressierten Plätzen abgelegt. Der Mikroprozessor verarbeitet nach eingeschriebenem Programm ebenfalls die von einem Modem ankommenden Textsignale und speichert sie in dem zugeordneten Datenspeicher (Seitenspeicher) ab. Die Steuerung wird mittels eingegebener Befehle von einer Fernbedienung oder einer Tastatur ausgelöst. Das Auslesen der punktbezogenen Daten aus dem Punktspeicher sowie die Attributinformation aus dem Attributspeicher erfolgen mittels einer Steuereinheit, die bei ausreichender Kapazität in der Computersteuereinheit mit integriert ist. Die entsprechende Steuerung kann durch diese aber auch unmittelbar erfolgen.

Es kann aber auch ein bekannter CRT-Controller z.B. MC 6845 von Motorola, beschrieben im Datenbuch von Motorola «Semiconductors, Microcomputer Components», 1979, S. 193 und ff. verwendet werden. Der CRT-Controller wird versorgt von einer Clock-Frequenz von 1 MHz bei normalen Fernsehfrequenzen, also 50 Hz Bildfrequenz und normale Zeilenzahl. Über einen Datenbus kann er auf bestimmte Darstellformate programmiert werden. Das üblicherweise angewendete Format besteht aus 40 Zeichen pro Zeile und 24 bzw. 25 Textzeilen pro Bild. Es ist jedoch auch eine abweichende Größe der V- und H-Austastlücke und deren Zuordnung zur Bilddarstellung programmierbar.

Die Erfindung ist in bezug auf einen Bildschirmtextdrucker in zwei Varianten ausführbar. Zum einen gestattet sie den Anschluß eines Druckers an einen Bildschirmtextdecoder, der nach der im Anspruch 1 angegebenen Lehre ausgebildet ist, und zwar an den Ausgang des Farbenspeichers. Zum anderen ist es möglich, die erfinderische Lehre ausschließlich in einem Drucker zu verwenden. Im letzteren Fall können die für die Anzeige auf dem Bildschirm notwendigen Zwischenspeicher und die Matrix entfallen.

Die Darstellungsgeschwindigkeit auf einem Bildschirm wird bestimmt durch die Ablenkgeschwindigkeit des abtastenden Elektronenstrahls. Dieser Geschwindigkeit können herkömmliche Matrixdrucker nicht folgen. Bei direktem Anschluß eines Druckers an einen Bildschirmtextdecoder, der gleichzeitig die Textdarstellung auf dem Bildschirm ermöglicht, ist deshalb in weiterer Ausgestaltung vorgesehen, einen Datenspeicher zwischenzuschalten, um die eingelesenen Daten unabhängig von der Einschreibgeschwindigkeit von der Druckersteuereinrichtung auslesen und ausdrucken lassen zu können. Der hier verwendete Datenspeicher wirkt als Zeichenpuffer, in dem die Informationen punktorientiert zeilenweise abgelegt sind.

Die Computersteuereinrichtung des Decoders für die Erzeugung der punktorientierten Daten kann mit der Steuereinrichtung des Druckers auch gekoppelt oder vereint sein und im Drucker angeordnet sein. Dies bedeutet, daß ein direkter Anschluß an ein Fernsprechnetz zum Ausdrucken der Bildschirmtextinformation möglich ist ohne Displaydarstellung. Der Benutzer kann somit in den Dialogverkehr mit einer Bildschirmtextzentrale treten, ohne daß hierfür ein Monitor oder Bildschirm zur Darstellung des Textes notwendig ist.

Um die Darstellung des Bildschirmtextes auf dem Bildschirm von den relativ langen Druckzeiten des Druckers unabhängig zu machen, wenn ein solcher angeschlossen ist, ist es zweckdienlich, den Seitenspeicher zu erhöhen und wahlweise die ausgewählten Seiten nachträglich nach getroffener Auswahl ausdrucken zu lassen. Bei dieser Ausbildung können sowohl die Übertragungssteuerung für die Steuereinrichtung des Druckers als auch die Steuerung des Druckers von der Computersteuereinrichtung des Decoders mit vorgenommen werden. Ist dieses jedoch nicht möglich, sollten die ankommenden Signale in einem Datenspeicher der Druckersteuereinrichtung zwischengepuffert werden. Es ist hierdurch möglich, die entsprechenden Seiten unabhängig von der Schreibgeschwindigkeit des Elektronenstrahls der Schreibgeschwindigkeit des Druckers angepaßt auszulesen und auszudrucken.

Eine andere vorteilhafte Ausbildung besteht darin, daß während der Auslesezeit der Daten aus dem Punktspeicher der Punktspeicher gesperrt wird.

Das Auslesen der Daten erfolgt zweckmäßigerweise über ein von der Computersteuereinrichtung geschaltetes Punktschieberegister, das aber auch von einem Zeichendarstellungsprozessor getaktet werden kann. Die Auslesegeschwindigkeit ist dabei der Druckgeschwindigkeit des Druckers angepaßt oder erfolgt in der Schreibgeschwindigkeit des Elektronenstrahls, wobei ein Zeichenpuffer zum Zwischenspeichern der Zeichen vorgesehen ist. Der Zeichenpuffer wird mit Druckgeschwindigkeit von der Druckersteuerung ausgelesen.

Die Erfindung bietet einen weiteren Vorteil, der darin besteht, daß eine gemeinsame Schnittstelle für Drucker und Bildschirmtextdarstellung gegeben ist. Hierdurch ist es möglich, die Computersteuereinrichtung, den Seiten- und Zeichenspeicher entweder mit einem Drucker zu kombinieren oder an diesen die textverarbeitenden Schaltungen für die Darstellung auf einem Bildschirm anzuschalten. Darüber hinaus können andere periphere Geräte, die die ankommenden Signale verarbeiten, an diese Schnittstelle angeschlossen werden, um die punktorientierten ausgehenden Daten zu verarbeiten.

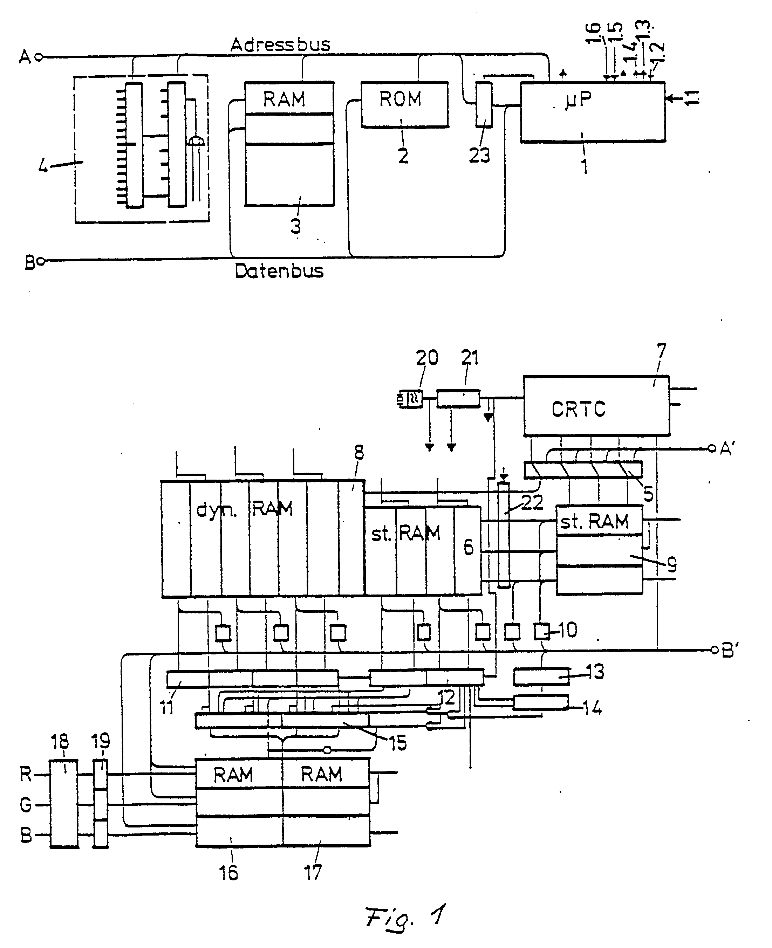

Ein Bildschirmtextdecoder und der Drucker mit allen Schaltungsmerkmalen für die Durchführung des Verfahrens nach der Erfindung werden nachfolgend anhand der in den Blockschaltbildern Fig. 1 bis Fig. 3 dargestellten Ausführungsbeispielen näher erläutert.

Der Bildschirmtextdecoder besteht aus einem Mikroprozessor 1, der die empfangenen Textsignale, Bedienfunktionssignale und Eingabe- und Steuergrößen auswertet und für die Verknüpfungssteuerung entsprechend programmiert ist. Als Programmspeicher für den Mikroprozessor dient ein Lesespeicher 2 (ROM). Als Datenspeicher wird ein maximal 64 kB erweiterungsfähiger Schreib/Lesespeicher 3 verwendet, in dem die empfangenen Textseiten abgelegt werden. Da der Mikroprozessor 1 aus Kapazitätsgründen über ein und dieselben Ausgänge sowohl die Adressen als auch die zeichenbezogenen Daten ausgibt, ist ein Adressenzwischenspeicher 23 vorgesehen, in welchem die Adressen auslesbar zwischengespeichert sind. Vor der Schnittstelle A–B ist ferner ein Chip-Selektor 4 vorgesehen, der zur Adressenaufschlüsselung die zu belegenden Speicher aktiviert. Der Mikroprozessor 1 wird über seinen Eingang 1.1 mit einer Clock-Frequenz, z. B. 12 MHz, getaktet. Die für den Prozessor notwendigen Unterfrequenzen werden durch eigene Teilung erzeugt. Die Eingänge 1.2 sowie die Ausgänge 1.3 und 1.4 sind mit einem Modem verbunden, das an die Telefonleitung angeschlossen ist und über die codierten Signale empfangen bzw. im Dialogverkehr an die Rechenzentrale ausgegeben wird. Der Eingang 1.5 ist mit einer Tastatur verbindbar, die der Einfachheit halber nicht dargestellt ist. Hierüber können die Programme eingeschrieben oder die entsprechenden Informationen zur Darstellung auf dem Bildschirm individuell eingegeben werden. Der Eingang 1.6 ist als Infrarot-Fernbedienungseingang vorgesehen. Hierüber werden die Steuerfunktionen von der Fernbedienung eingegeben, z. B. der Wiedergabebefehl von in den Vertikalaustastlücken des Fernsehsignals übertragenen Videotextsignalen, Umschalten auf Bildschirmtextempfang, Fernsehempfang usw.

Die Schnittstelle A–B ist mit der Schnittstelle A'–B' verbunden. Die vom Mikroprozessor 1 zunächst in dem RAM 3 gespeicherten Seiten werden nach Empfang zwecks Darstellung wieder ausgelesen und der Zeicheninhalt mit dem im Programmspeicher 2 enthaltenen Zeichenvorrat verglichen. Der Mikroprozessor 1 stellt dabei fest, welche Struktur das Zeichen aufweist und welches Attribut ihm zuzuordnen ist. Die entsprechenden Daten werden attributsmäßig zeichenblockweise und punktorientiert zeilenweise in den entsprechenden später beschriebenen Speichern 6 und 8 abgelegt.

Die Abspeicherung der den Zeichen zugeordneten Daten sowie die Adressierung und Umadressierung erfolgen vom μP 1 gesteuert in der Weise, daß die Adressen über einen Adreßmultiplexer 5 an die Adreßeingänge eines statischen RAM-Speichers, der als Adressenspeicher 9 vorgesehen ist, angelegt werden. Es handelt sich dabei um einen mehrstufigen, der Zeichenblockzahl angepaßten statischen RAM-Speicher (z. B. 1024 Plätze). Der Adreßmultiplexer 5 wird nur während der Vertikalaustastzeit so umgeschaltet, daß die Adressen die zu belegenden Speicherplätze adressieren. Während der Schreibzeit des Bildes ist die Adreßleitung über den Multiplexer 5 von dem μP 1 abgetrennt, hingegen die Steuerausgänge des CRT-Controllers 7 eingeschaltet. Zum Einspeichern der den Zeichen zugeordneten Informationen werden die vom Mikroprozessorausgang abgegebenen Daten über einen Datenbus und über Busschalter 10 zunächst in den Adressierspeicher 9 eingeschrieben. Die anstehenden Daten in dem Adressierspeicher 9 bilden die Adressen für den Attributspeicher 6. Die Daten werden in einem Zwischenspeicher 22 zwischengespeichert und getaktet gesteuert an den Attributspeicher 6 weitergegeben.

Nunmehr werden Attributdaten über den Datenbus in dem Attributspeicher 6 abgelegt. Die Attribute sind zeichenbezogen, z. B. Hintergrundfarbe, Blinkzeichen u. dgl. Sie werden über zugeordnete Busschalter vom μP 1 gesteuert eingelesen. Parallel hierzu erfolgt auch die Adressierung des punktorganisierten dynamischen Schreib/Lesespeichers, der ein 16 K dynamischer RAM-Speicher ist. Zwischengeschaltet ist eine Adressierlogik, die der Einfachheit halber nicht dargestellt ist. Diese ist dann notwendig, wenn der dynamische Punktspeicher 8 nur seriell adressierbar ist. Die eingehenden Paralleladressen werden erst in seriell einschreibbare Adressen umgesetzt, da der Speicher nur diese verarbeiten kann.

Die einem jeden Attribut, das im statischen RAM 6 abgespeichert ist, zugeordneten punktorientierten Zeicheninformationen werden vom μP 1 ausgegeben und über die den einzelnen Speicher zugeordneten Busschalter 10 eingeschrieben. Damit erhält man im Punktspeicher 8 eine auf jeden Punkt eines darzustellenden Zeichens zugeordnete digitale Dateninformation. Es ist ersichtlich, daß nur durch Auslesen dieses dynamischen RAM-Speichers 8 bereits eine Darstellung einer gesamten Textseite erfolgen kann, da die Zeichenpunktinformation lediglich zeilenweise dargestellt zu werden brauchen.

Der Punktspeicher 8 dient insofern als Bildwiederholspeicher. Wird nun infolge einer rollenden Einschreibung neuer Datenzeilen in einen bestehenden Text, z. B. bei der Angabe von Fahrplänen, eine Datenzeile ausgetastet und eine neue eingegeben, so bewirkt der Adressierspeicher 9 die entsprechende Umadressierung. Es brauchen die neuen Seiten nicht mehr komplett eingegeben zu werden. Nach der Umadressierung im Adressierspeicher 9 werden automatisch durch die ausgehenden Informationen die Attribut- und Punktspeicher umorganisiert.

Die punktorientiert abgelegten Zeichendaten im dynamischen Punktspeicher 8 werden digitalcodiert über einem Punktschieberegister 11 und einer Multiplexschaltung 15 in einem Farbenspeicher 16 abgelegt. Die Adressierung erfolgt über den CRT-Controller 7, der die Umsetzung bewirkt, in der Weise, daß die über das Punktschieberegister 11 und den Mode-Multiplexer 15 anliegenden punktorientierten Daten unmittelbar zur Darstellung des Textes auf dem Bildschirm herangezogen werden können. Der CRT-Controller bewirkt aufgrund seiner Eigensteuerung dabei, daß im gleichen Abtastraster die Daten eingelesen und weitergegeben werden. Getaktet wird der CRT-Controller durch die Impulse eines Generators 20 mit einem nachgeschalteten Frequenzteiler 21, der die entsprechenden Clock-Frequenzen zur Steuerung der Systeme erzeugt.

Da in dem Attribut-Speicher 6 die Attribute für die Zeichen abgelegt sind, muß für die farbbildliche Darstellung dieser Information ebenfalls Sorge getragen werden. Hierzu werden die eingeschriebenen Daten über einen Zwischenspeicher und den Mode-Multiplexer 15 in einem Farbenspeicher 17 abgelegt. Die Einschreibung erfolgt dabei über den CRT-Controller 7 ebenfalls zeichenorientiert. Die beiden Ausgabe-Farbenspeicher 16 und 17 beinhalten sämtliche punkt- und zeichenadressierten Attribute, die für die Darstellung der Zeichen benötigt werden. Um Blinkfrequenzen ebenfalls einblenden zu können, ist ein Blinkspeicher 13 vorgesehen, in dem die verschiedenen Blinksequenzen festgehalten sind. Diese Blinksequenzen werden attributgesteuert über den Selektor 14 ausgelesen und als Information in dem Farbenspeicher 17 ebenfalls abgelegt. Die Verknüpfung erfolgt dabei über logische Gatter, sofern dieses systembedingt notwendig ist.

Wie bereits erwähnt, werden die Punktinformationen zeilenweise und die Attribute zeichenblockweise als Endausgabedaten in Farbenspeichern abgelegt. Zur Darstellung ist es notwendig, daß eine mit der Abtastfrequenz des Bildschirmtextes arbeitende Multiplexschaltung die abgelegten Zeilendaten in eine Matrixschaltung überträgt, die aus den Digitaldaten die für die Darstellung notwendigen analogen Größen für die Grundfarben Rot, Grün, Blau erzeugt. Die Ausgänge der Matrix 19 steuern z.B. direkt die Kathoden einer Farbbildröhre. Zur Wiederholung der einzelnen Bilder ist es lediglich erforderlich, daß über den CRT-Controller gesteuert die punktorientierten Daten nach dem Schreiben eines Einzelbildes immer wieder in die Farbenspeicher 16 unter Beachtung der Attribute eingelesen werden. Es ist ersichtlich, daß durch einfache Maßnahmen somit bei der Darstellung eines jeden Bildes nach Ablauf eines Bildschreibzyklus neue geänderte Textinformationen umorganisiert in dem dynamischen Punktspeicher 8 abgelegt werden können. Ein rollendes Einschreiben einzelner Zeilen ist somit auf einfache Weise möglich, ohne daß der Rechenaufwand wesentlich vergrößert werden muß, wodurch die Rechenzeiten in gewünschter Weise sehr klein gehalten werden können.

Bei den verwendeten Speichern handelt es sich um:

1. Einen Programmspeicher mit der Kapazität 8 kByte, max. 64 kByte
2. Einen Datenspeicher mit der Kapazität 2 ÷ 16 kByte, kaskadiert 64 kB
3. Einen Attributspeicher mit der Kapazität 2 kByte
4. Einen Adressierspeicher mit der Kapazität 1 kByte
5. Einen Punktspeicher mit der Kapazität 48 kByte
6. Einen Farbenspeicher mit der Kapazität 24 kByte
7. Einen weiteren Farbenspeicher mit der Kapazität 24 kByte

Zum besseren Verständnis der Erfindung sei noch auf die Organisationen des Adressierspeichers, des Attributspeichers und des Punktspeichers sowie auf die Verknüpfungsebene zwischen den Schieberegistern mit den zugeordneten Attribut-, Punkt- und Farbenspeichern eingegangen.

Die Organisation des Adressierspeichers ist folgende:

Zur schnellen Umschichtung großer Datenmengen auf dem Bildschirm wird der Adressierspeicher 9 verwendet. Die Adressen einzelnen Zeichen werden dort schnell und einfach manipuliert, ohne daß größere zeitraubende Umschichtungen im punktorientierten Wiederholspeicher nötig werden. Normalerweise wird die Adresse nicht verändert, d.h. unter der Adresse 0 ist die Adresse 0 für den Bildwiederholspeicher abgelegt usw.:

| 0 | 1 | 2 | · | · | · | · | 39 | feste Zeile |
| 40 | 41 | 42 | · | · | · | · | 79 | |
| · | | | | | | | | Scrolling Bereich |
| · | | | | | | | | |
| 880 | · | · | · | · | · | · | 919 | |
| 920 | · | · | · | · | · | · | 959 | feste Zeile |

Wird im Zuge einer Scrolling-Prozedur der oben gekennzeichnete Bereich als Scrolling-Bereich festgelegt und wird dieser Bereich von unten her mit einer neuen Zeile aufgefüllt, so ergibt sich folgende Verteilung:

| 0 | 1 | 2 | · | · | · | · | 39 | feste Zeile |
| 80 | 81 | 82 | · | · | · | · | 119 | |
| 120 | · | · | · | · | · | · | 159 | |
| · | | | | | | | | Scrolling-Bereich |
| 880 | · | · | · | · | · | · | 919 | |
| 40 | 41 | 42 | · | · | · | · | 79 | |
| 920 | · | · | · | · | · | · | 959 | feste Zeile |

Der Bereich 40 ... 79 des Bildwiederholspeichers wurde dabei durch eine neue Zeile ersetzt.

Die Adressen des Scrolling-Bereiches wurden gleichzeitig verändert.

Die Organisation des Attributspeichers ist folgende:

Der Attributspeicher ist zeichenorientiert organisiert und besteht aus vier statischen 4 kbit RAMS, die ihrerseits 1 k × 4 organisiert sind.

Jedem dieser RAMS ist ein Attributsbereich zugeordnet. Die Attribute werden als 4 Bit-Datenworte, wie folgende Aufstellung zeigt, definiert und in dem Speicher abgelegt.

| 0 | 1 | 2 | 3 | 4 | 5 | 6 | 7 | 8 | 9 | A | B | C | D | E | F |
|---|---|---|---|---|---|---|---|---|---|---|---|---|---|---|---|
| Vordergrund | | | | Hintergrund | | | | Schieberegistertakt 6/12 MHz | Display Conceal (Darstellung des Hintergrundes) | Ferngeladene oder Basisfarben | offen | Steady | | Flashing | |

Ist in dem Attributspeicher durch eine bit-Information das Attribut Mehrfarben-DRCS (ferngeladen oder Basisfarbe) enthalten, so ist die Farbadresse für jeden Darstellungspunkt im Punktspeicher als Mehrbitinformation abgelegt und ruft über den Multiplexer 15 die Farbinformation aus dem Farbenspeicher ab. Liegt hingegen die bit-Information 2 Farben-DRCS an (Basisfarbe), so bilden die Daten des Attributspeichers 6 die Adressen für den Farbenspeicher 16, 17 und werden über den umgeschalteten Multiplexer 15 ausgegeben.

Die Speicherorganisation der Punktspeicher ist folgende:

Der Bildwiederholspeicher ist punktorientiert organisiert und besteht aus sechs dynamischen 64 kbit RAMS, die ihrerseits 16 k × 4 organisiert sind. Dadurch erhält man eine für die Darstellung günstige Breite von 24 Bit. Die Auflösung des Zeichens und der Farbe sowie die dazugehörige Punktspeicherbelegung (pro Zeichen 24 Bit) sind der nachfolgenden Tabelle entnehmbar. Die ersten beiden Ziffern der Mode-Spalte geben die Punktmatrix, die letzte die Farbvarianten an. Die vermerkten Indices ABCD der Speicherplatzbelegung dienen als Hinweis, daß verschiedene vorhandene Bit-Nummern zusammengesetzt werden können; die Selektion nimmt der Selektor nach den den Indices zugeordneten unterschiedlichen Wertigkeiten und in Abhängigkeit von dem Attribut vor.

| Mode | | | | | | | | | | | | | | | | | | | | | | | | |
|---|---|---|---|---|---|---|---|---|---|---|---|---|---|---|---|---|---|---|---|---|---|---|---|---|
| 12 × 10 × 1 | 0A | 1A | 2A | 3A | 4A | 5A | 6A | 7A | 8A | 9A | 10A | 11A | 0 | 0 | 0 | 0 | 0 | 0 | 0 | 0 | 0 | 0 | 0 | 0 |
| 12 × 10 × 2 | 0A | 1A | 2A | 3A | 4A | 5A | 6A | 7A | 8A | 9A | 10A | 11A | 0B | 1B | 2B | 3B | 4B | 5B | 6B | 7B | 8B | 9B | 10B | 11B |
| 6 × 10 × 1 | 0A | 1A | 2A | 3A | 4A | 5A | 0 | 0 | 0 | 0 | 0 | 0 | 0 | 0 | 0 | 0 | 0 | 0 | 0 | 0 | 0 | 0 | 0 | 0 |
| 6 × 10 × 2 | 0A | 1A | 2A | 3A | 4A | 5A | 0 | 0 | 0 | 0 | 0 | 0 | 0B | 1B | 2B | 3B | 4B | 5B | 0 | 0 | 0 | 0 | 0 | 0 |
| 6 × 10 × 4 | 0A | 1A | 2A | 3A | 4A | 5A | 0D | 1D | 2D | 3D | 4D | 5D | 0B | 1B | 2B | 3B | 4B | 5B | 0C | 1C | 2C | 3C | 4C | 5C |
| 6 × 5 × 2 | 0A | 1A | 2A | 3A | 4A | 5A | 0 | 0 | 0 | 0 | 0 | 0 | 0B | 1B | 2B | 3B | 4B | 5B | 0 | 0 | 0 | 0 | 0 | 0 |
| 6 × 5 × 4 | 0A | 1A | 2A | 3A | 4A | 5A | 0D | 1D | 2D | 3D | 4D | 5D | 0B | 1B | 2B | 3B | 4B | 5B | 0C | 1C | 2C | 3C | 4C | 5C |

Für 1 bit = 2 Farben-Mode
Für 2 bit = 4 Farben-Mode
Für 4 bit = 16 Farben-Mode

Die Verknüpfungsebene zwischen dem punktorientierten Speicher und dem Attributspeicher sowie den Farbenspeichern ist folgende:

Die Verknüpfungsebene liegt zwischen den Schieberegistern 11, den Attributzwischenspeichern 12 und den Farbenspeichern 16, 17. Die beiden Multiplexer 15 selektieren verschiedene 4 Bit-Eingangsinformationen. Verwendet wird ein 4-Wege-Multiplexer 74153 mit zwei Selektionseingängen. Liegen, wie aus nachfolgender Tabelle ersichtlich, die Bit-Informationen an, so werden über entsprechend geschalteten Selektor die Daten für die Adressierung des Farbspeichers entweder aus dem Punktspeicher 8 oder aus dem Attributsspeicher 9 entnommen.

| Selektionseingang | | Selektion |
|---|---|---|
| A | B | |
| 0 | 0 | Ferngeladene Farben |
| 0 | 1 | Ferngeladene Farben |
| 1 | 0 | Vordergrundbasisfarbe |
| 1 | 1 | Hintergrundbasisfarbe |

Entsprechend der Selektion wird die Verknüpfungsebene geschaltet.

Der Blinkselektor 14 selektiert über drei Attributeingänge A, B, C acht verschiedene Blinksequenzen, die an dem Blinkspeicher 13 anliegen.

Die Wirkungsweise und die Ansteuermöglichkeiten sowie die Ausgabe der Daten über den CRT-Controller sollen hier nicht näher beschrieben werden. Es sei auf einen bekannten CRT-Controller der Firma Motorola, MC 6845, verwiesen, der im Datenbuch Motorola «Semiconductors, Microcomputer Component», Ausgabe 1979, Seite 193 und ff., beschrieben ist. Dabei ist darauf zu achten, daß die vom CRT-Controller vollzogenen Steuerfunktionen ablaufgemäß vom Microcomputer bestimmt werden. Der Mikrocomputer und der CRT-Controller müssen deshalb mit der geeigneten Software programmiert werden.

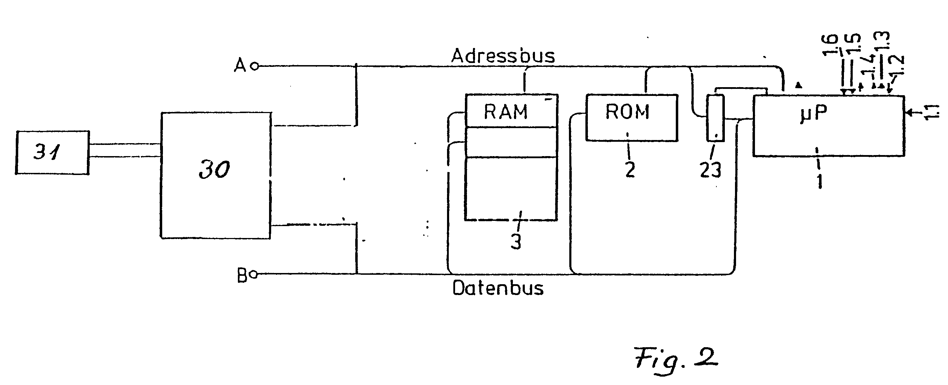

Der Bildschirmtextdecoder nach Fig. 2 besteht entsprechend der Ausführung nach Fig. 1 aus einem Mikroprozessor 1, der die empfangenen Textsignale, Bedienfunktionssignale und Eingabe- und Steuergrößen auswertet und für die Verknüpfungssteuerung entsprechend programmiert ist. Als Programmspeicher für den Mikroprozessor dient ein Lesespeicher 2 (ROM). Als Datenspeicher wird ein auf max. 64 kB erweiterungsfähiger Schreib/Lesespeicher 3 verwendet, in welchem die empfangenen Signale seitenweise abgelegt werden. Da der Mikroprozessor 1 aus Kapazitätsgründen über ein und denselben Ausgang sowohl die Adressen als auch die zeichenbezogenen Daten ausgibt, ist ein Adressenzwischenspeicher 23 vorgesehen, in welchem die auf jeden Punkt einen Zeichens bezogenen Adressen zwischengespeichert sind. Am Ausgang befinden sich die Schnittstellen A und B, an die entweder eine signalverarbeitende Schaltung für die Darstellung des empfangenen Bildschirmtextes auf einem Bildschirm anschließbar ist oder, wie im Ausführungsbeispiel dargestellt, eine Druckersteuerung 30. Eine bekannte Druckersteuerung ist beispielsweise in der DE-OS 3 131 953 für einen Thermodrucker beschrieben. In der Regel werden die empfangenen Zeichen in einem Zeichenpuffer zwischengespeichert und dann einem Zeichendecoder zugeführt, der die empfangenen Zeichen für die Darstellung mit dem Drucker in den notwendigen Code umsetzt. Die so erhaltenen Signale werden von einer Treiberschaltung zur Ansteuerung des Druckerkopfes zugeführt. Auf derartige hier als bekannt vorausgesetzte Druckersteuerungen wird im weiteren nicht mehr näher eingegangen. Es sind verschiedene punktgesteuerte Drucker bekannt, wie Thermodrucker, Nadeldrucker, Tintendrucker usw. Alle arbeiten entweder nach dem Matrixsystem oder durch Einzelpunktsteuerungsverfahren. Die Druckersteuerung steuert den Druckkopf 31, der die darzustellenden Symbole, Zeichen und Grafiken auf dem Aufzeichnungsträger ausdruckt. Der Teilnehmer kann darüber hinaus über die an dem Mikroprozessor 1 angeschlossene Eingabetastatur in den Dialogverkehr mit der Bildschirmtextzentrale oder einen hierüber angeschlossenen Rechner treten. Er erhält sofort einen ausgedruckten Text der Bildschirmtextzentrale. Für die Auswahl der entsprechenden auszudruckenden Seiten ist es angebracht, an den Schnittstellen A–B eine Schaltungsanordnung zur Darstellung des Textes auf einem Bildschirm anzuordnen. Der Drucker sollte dann jedoch mit einem Zeichenpuffer versehen sein, in dem die einzelnen Informationen für die Anpassung an die Druckergeschwindigkeit zwischengespeichert werden. Der Zeichenpuffer wird mit einer eigenen Clock-Frequenz ausgelesen.

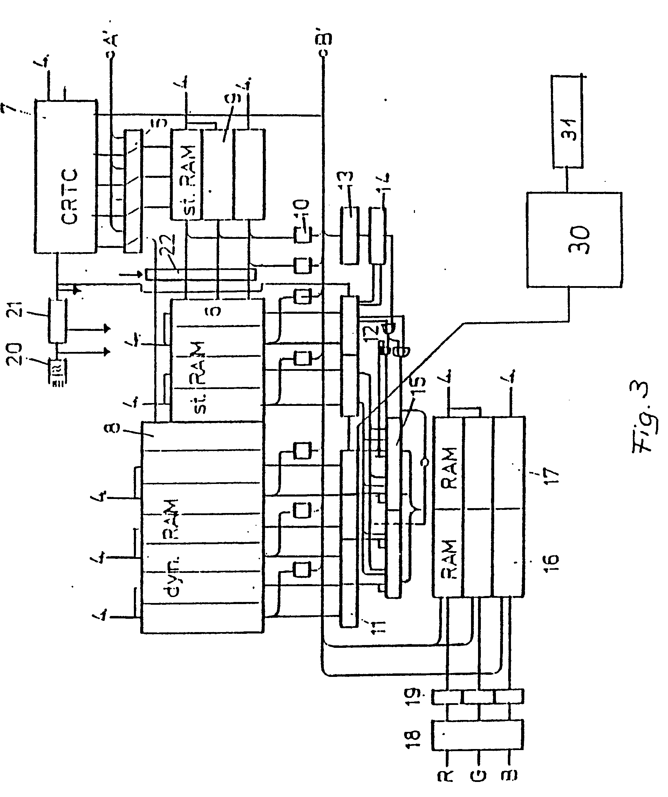

In Fig. 3 ist ein Bildschirmtextdecoder nach Fig. 1 dargestellt, der vorrangig dazu dient, den Bildschirmtext auf dem Bildschirm darzustellen. Zusätzlich ist die Interface-Schaltung für einen Drucker 31 vorgesehen.

Bei der Verwendung eines derartigen Bildschirmtextdecoders ist die Druckersteuerung 30, die zur Anpassung der Schreibgeschwindigkeit einen eigenen Datenspeicher als Zeichenpuffer aufweisen sollte, über ein Punktschieberegister 11 an den Punktspeicher angeschlossen. Das Punktschieberegister 11 wird von der Computersteuereinrichtung 1 oder dem CRT-Controller 7 gesteuert. Die so übertragenen punktbezogenen Daten werden von dem Drucker 31 über die Steuerung 30 gesteuert ausgedruckt.

Das erfindungsgemäße Verfahren ist nicht nur auf die dargestellten Ausführungsbeispiele beschränkt. An die Stelle der punktorientierten Ablage der empfangenen Zeichen in einem dynamischen RAM 8 und den zugeordneten Schaltungen für die Punktdarstellung kann auch ein Zeichengenerator treten, der eine direkte Darstellung der empfangenen und mittels der ersten Stufe umgesetzten punktbezogenen Zeichen ermöglicht und diese zwischenspeichert. In diesem Fall empfiehlt es sich, nach Fig. 1 den Drucker unmittelbar an die Schnittstelle A–B anzuschließen.

**Patentansprüche**

1. Schaltungsanordnung für die Darstellung von Texten, Graphiken und Symbolen auf dem Bildschirm eines Monitors oder Farbfernsehempfängers und zur Ausgabe der Informationen an periphere Geräte, wie Drucker, bei welchem die empfangenen Informationen seitenweise in einem Seitenspeicher (3) abgelegt und für jedes Punktelement eines darzustellenden Zeichens von einer Computersteuereinheit (1) mittels eines auslesbaren Zeichenspeichers (2) die Adresse für den jeweiligen Ort auf dem Bildschirm ermittelt und die Darstellungsinformation des Punktelementes in einem Datenspeicher unter der ermittelten Adresse und die einem Zeichen zugeordneten Farbdaten in einem Attributspeicher (6) abgelegt sind, welche Punktelemente und Farbdaten von einer Steuereinrichtung (7) ausgelesen und miteinander verknüpft in einer Videosignalerzeugungsschaltung in auf dem Bildschirm wiedergebbare Videosignale umgesetzt oder an periphere Geräte ausgegeben werden, gekennzeichnet durch folgende Merkmale:

In dem Seitenspeicher (3) (RAM) sind die Daten der seitenweise empfangenen codierten Textinformationen von der Computersteuereinheit (1) gesteuert auslesbar abgelegt;

in einem als Programmspeicher vorgesehenen Zeichenspeicher (2) (ROM) sind die codierten Daten aller darstellbaren Zeichen fest eingeschrieben;

die Computersteuereinheit (1) liest die Daten der Textinformation eines jeden Zeichenplatzes aus dem Seitenspeicher aus und ermittelt die auf einen einzelnen Darstellungspunkt eines Zeichens bezogenen Daten unter Zugriff auf den Zeichenspeicher (2) und gibt diese mit der zugeordneten Adresse für den Darstellungsort auf dem Bildschirm über einen Adreß- und Datenbus (A, B) aus;

in einem als Vollbildspeicher vorgesehenen Punktspeicher (8) werden die punktorientierten Daten unter der zeichenplatzbezogenen Adresse während der Vertikalaustastzeit bei der zeilenweise Darstellung des Textes auf dem Bildschirm von der Computersteuereinheit (1) eingeschrieben, wobei die punktorientierten Daten Schaltfunktionen und/oder punktbezogene Farbadressen für die nachfolgende Logik sind;

die einem jeden Zeichenplatz zugeordneten Farb- und Darstellungsattribute, z.B. Vorder- und Hintergrundfarben, Mehrfarben-DRCS oder Blinken, werden von der Computersteuereinheit (1) anhand der Informationen im Seitenspeicher ermittelt und zugleich in einem Attributspeicher (6) abgelegt;

die Daten in dem Punkt- (8) und Attributspeicher (6) sind die Adressen für einen nachgeschalteten Farbenspeicher (16, 17);

die Steuereinrichtung (7) liest die in dem dynamischen Punktspeicher (8) und dem Attributspeicher (6) enthaltenen Daten adressiert und mit der Ablenkung des Elektronenstrahls der Bildröhre (1) oder der Arbeitsgeschwindigkeit des peripheren Gerätes synchronisiert aus und führt diese über den Speicher (6, 8) zugeordnete Punktschieberegister (11, 12) einer Multiplexschaltung (15) zu, die sowohl von den im Punktspeicher abgelegten Schaltfunktionen als auch von den in dem Attributspeicher zeichenplatzbezogenen Attributen umschaltbar ist, in der Weise, daß eine Schaltfunktion für einen Darstellungspunkt den Multiplexer (15) umschaltet, und die unter der zugehörigen Adresse im Attributspeicher (6) abgelegten Vorder- und Hintergrundfarben bzw. Darstellungsinformationen aus dem Farbenspeicher (16, 17) abruft, und daß der Multiplexer (15) ferner in Abhängigkeit von einer im Attributspeicher (6) abgelegten zeichenplatzbezogenen Mehrfarben- oder einer anderen punktbezogenen Darstellungsinformation umschaltet und die im Punktspeicher unter der gleichen Zeichenplatzadresse abgelegten punktbezogenen Farb- und Darstellungsdaten an den nachgeschalteten Farbenspeicher (16, 17) ausgibt und die entsprechenden Farbinformationen aufruft;

die Steuereinheit (7) gibt die ermittelten punktbezogenen Farbdaten aus und schiebt sie entweder in eine Matrixschaltung (18) mit integriertem Digitalwandler, von welchem die RGB-Signale zur Ansteuerung der Bildröhre abgreifbar sind, oder an den Ausgang als punktbezogene Information für periphere Geräte.

2. Schaltungsanordnung nach Anspruch 1 für die farbbildliche Darstellung der Zeichen ohne besondere den Zeichenblöcken zugeordnete Attribute, dadurch gekennzeichnet, daß ausschließlich nur die den einzelnen Punkten der Zeichen zugeordneten im dynamischen Punktspeicher (8) abgelegten Daten über die Steuereinrichtung (7) die adressierten Farbinformationen aus dem Farbenspeicher (16, 17) aufrufen.

3. Schaltungsanordnung nach Anspruch 1 oder 2, zur Darstellung der Zeichen auf einem Display, das zeilen- und spaltenweise ansteuerbar ist, dadurch gekennzeichnet, daß die aus dem Farbenspeicher (16) gelesenen Informationen über die Steuereinheit (7) an die Display-Eingänge unter der punktbezogenen Adresse geschaltet werden.

4. Schaltungsanordnung nach Anspruch 1, dadurch gekennzeichnet, daß ein Farbenspeicher (16, 17) mit mehreren Farbspeicherbereichen vorgesehen ist, in denen die Vorder- und Hintergrundfarben sowie die Darstellungsattribute separat abgelegt sind und daß die Daten von der Steuereinheit (7) über eine weitere Multiplexschaltung (19) ausgelesen und der Matrixschaltung (18) zugeführt werden.

5. Schaltungsanordnung nach einem der vorhergehenden Ansprüche, dadurch gekennzeichnet, daß ein zusätzlicher Adressierspeicher (9) (statisches RAM) vorgesehen ist, in dem die für den Zeichenplatz ermittelten Adressen blockweise eingeschrieben sind, und, daß diese Adressen die Adressen für jeden Zeichenplatz einer Darstellungszeile und die Adressen für die dem Zeichenplatz zugeordneten Attribute bilden, die über einen Zwischenspeicher (22) gepuffert die Speicherbereiche und Speicherplätze der Punkt- und Attributspeicher (6, 8) adressieren.

6. Schaltungsanordnung nach einem der vorhergehenden Ansprüche, dadurch gekennzeichnet, daß zur Aktivierung der Punkt-, Attribut- und Adressen-Speicher (6, 8, 9) ein Chip-Sektor (4) vorgesehen ist und die Daten in den Punkt- (8) und Attributspeicher (6) über einen von der Computersteuereinheit (1) gesteuerten Multiplexer (5) eingeschrieben werden.

7. Schaltungsanordnung nach Anspruch 5, dadurch gekennzeichnet, daß für das sogenannte Scrolling-Verfahren, bei dem einzelne Zeilenblockreihen ausgetauscht und durch neu eingeblendete Zeichenblockreihen laufend ersetzt werden, ohne daß dabei der übrige Inhalt der Textinformation geändert wird, die neuen Zeichen entsprechend adressiert im Adressierspeicher (9) abgelegt werden, der die Umadressierung im Attribut- und Punktspeicher entsprechend der von der Computersteuereinheit (1) oder der Steuereinheit (7) ermittelten Adresse vornimmt, wobei die zugehörigen punktbezogenen Daten in dem Punktspeicher (8) und die Attribute in dem Attributspeicher (6) nur unter der entsprechenden Adresse gegen neue ausgetauscht werden.

8. Schaltungsanordnung nach Anspruch 2, dadurch gekennzeichnet, daß als Bildwiederholspeicher ausschließlich der dynamische Punktspeicher (8) verwendet wird und daß die im Punktspeicher enthaltenen Informationen in den Farbenspeicher über ein Punktschieberegister eingegeben und über einen von der Steuereinheit (7) gesteuerten Multiplexer (19) ausgelesen werden.

9. Schaltungsanordnung zur bildlichen Darstellung von Texten, Grafiken und Symbolen mittels punktgesteuerter Drucker, wie Thermo-, Nadel- und Tintendrucker, nach Anspruch 1 oder einem der Ansprüche 2 bis 8, dadurch gekennzeichnet, daß die punktorientierten Daten des Farbenspeichers (16, 17) oder die im Punktspeicher (8) eines jeden Zeichenpunktes in einen Datenspeicher einer weiteren Steuereinrichtung (30) für den Drucker (31) unter einer von der Computersteuereinrichtung (1) ausgegebenen punktbezogenen Adresse zeilenweise über einen Adressenbus adressiert abgelegt und über eine von der Computersteuereinrichtung (1) gesteuerten Treiberschaltung zur direkten Ansteuerung der Punktmatrix des Druckers (31) mit einer Geschwindigkeit ausgelesen werden, die gleich oder kleiner der maximalen Druckgeschwindigkeit ist.

10. Schaltungsanordnung nach Anspruch 9, dadurch gekennzeichnet, daß der Punktspeicher (8) während des Auslesens der Daten für die Annahme von neuen Daten gesperrt ist, und daß erst durch Abgabe eines Steuerbefehls über die Computersteuereinrichtung während der Vertikalaustastzeit die Zeichen der Textinformation der nächsten Seite im punktorientierten Datenspeicher adressiert abgelegt werden.

11. Schaltungsanordnung nach Anspruch 9 oder 10, dadurch gekennzeichnet, daß der Punktspeicher (8) mit einer Multiplexschaltung verbunden ist, über die die im Punktspeicher (8) abgelegten Daten zeilenweise mit der Schreibfrequenz des Elektronenstrahls der Bildröhre in einen Datenspeicher der Druckersteuereinrichtung (30) eingeschrieben und für eine Treiberschaltung mit der Schreibfrequenz des Druckers ausgelesen werden.

## Claims

1. Circuit arrangement for the representation of texts, graphics and symbols on the image screen of a monitor or colour television receiver and for the issue of the information to peripheral devices, such as printers, in which the received information is filed page by page in a page store (3) and the address for the respective location on the image screen is determined, by a computer control unit (1) by means of a readable character store (2), for each point element of a character to be represented and the representational information of the point element is filed in a data store under the determined address and the colour data associated with a character are filed in an attribute store (6), which point elements and colour data are read out by a control equipment (7) and, one interlinked with the other, converted in a video signal generating circuit into video signals reproduceable on the image screen or issued to peripheral devices, characterised by the following features:

The data of the coded text information, which is received page by page, is filed in in the page store (3) (random access memory) to be readable under the control of the computer control unit (1);

the coded data of all reproduceable data are fixedly recorded in a character store (2) (read-only memory) provided as program store;

the computer control unit (1) reads the data of the text information of each character place out of the page store and determines the data relating to an individual representation point of a character with access to the character store (2) and issues these with the associated address for the place of representation on the image screen by way of an address and data bus (A, B);

the point-oriented data are recorded by the computer control unit (1) under the address, which is related to character place, in a point store (8), which is provided as full picture store, during the vertical black-out time in the line-by-line representation of the text on the image screen, wherein the point-oriented data are switching functions and/or point-related colour addresses for the following logic system;

the colour and representation attributes, for example colours of foreground and background, multi-colour DRCS or flashing, associated which each character place are determined by the computer control unit (1) with the aid of the information in the page store and at the same time filed in an attribute store (6);

the data in the point store (8) and the attribute store (6) are the addresses for a colour store (16, 17) connected therebehind;

the control equipment (7) reads out the data, which are contained in the dynamic point store (8) and in the attribute store (6), addressed and synchronised with the deflection of the electron beam of the image tube (1) or with the operating speed of the peripheral device and conducts these by way of point shift registers (11, 12) associated with the stores (6, 8) to a multiplex circuit (15), which is switchable over from the switching functions filed in the point store as well as also from character-place-related attributes in the attribute store in the manner that a switching function for a representation point switches over the multiplexer (15) and calls up the colours of foreground and background or representational information filed under the associated address in the attribute store (6) out of the colour store (16, 17) and that the multiplexer (15) furthermore switches over in dependence on a character-place-related multicolour information or another point-related representational information filed in the attribute store (6) and issues the point-related colour data and representational data filed under the same character place address in the point store to the colour store (16, 17) connected therebehind and calls up the corresponding colour information;

the control unit (7) issues the point-related colour data and shifts them either into a matrix circuit (18) with integrated digital converter, from which the RGB signals for the driving of the image tube are derivable, or to the output as point-related information for peripheral devices.

2. Circuit arrangement according to claim 1 for the colour image representation of the characters without special attributes associated with the character blocks, characterised thereby, that exclusively only the data, which are associated with the individual points of the characters and filed in the dynamic point store (8), by way of the control equipment (7) call up the addressed colour information out of the colour store (16, 17).

3. Circuit arrangement according to claim 1 or 2 for representation of the characters on a display which is drivable line by line or column by column, characterised thereby, that the information read out of the colour store (16) is switched by way of the control unit (7) to the display inputs under the point-related adress.

4. Circuit arrangement according to claim 1, characterised thereby, that a colour store (16, 17) with several colour storage regions is provided, in which the colours of foreground and background as well as the representational attributes are filed separately and that the data are read out by the control unit (7) by way of a further multiplex circuit (19) and conducted to the matrix circuit (18).

5. Circuit arrangement according to one of the preceding claims, characterised thereby, that an additional addressing store (9) (static random access memory) is provided, in which the addresses determined for the character place are recorded block by block, and that these addresses form the addresses for each character place of a representation line and the addresses for the attributes associated with the character place, which buffered by way of an intermediate store (22) address the storage regions and storage places of the point store (8) and of the attribute store (6).

6. Circuit arrangement according to one of the preceding claims, characterised thereby, that a chip sector (4) is provided for the activation of the point store (8), the attribute store (6) and the address store (9) and that the data are entered into the point store (8) and the attribute store (6) by way of a multiplexer (5) controlled by the computer control unit (1).

7. Circuit arrangement according to claim 5, characterised thereby, that for the so-called scrolling process, in which individual line block series are exchanged and continuously replaced by line block series gated in anew without the remaining content of the text information in that case being changed, the new characters are filed correspondingly addressed in the adressing store (9), which performs the re-addressing in the attribute store and in the point store in correspondence with the address determined by the computer control unit (1) or the control unit (7).

8. Circuit arrangement according to claim 2, characterised thereby, that exclusively the dynamic point store (8) is used as image repetition store and that the information contained in the point store is put into the colour store by way of a point shift register and read out by a multiplexer (19) controlled by the control unit (7).

9. Circuit arrangement for the pictorial representation of texts, graphics and symbols by means of point-controlled printers, such as thermal printers, needle printers and ink printers, according to claim 1 or one of the claims 2 to 8, characterised thereby, that the point-oriented data of the colour store (16, 17) or those in the point store (8) of each character point are filed, addressed line by line way of an address bus, under a point-related address issued by the computer control unit (1) in a data store of a further control equipment (30) for the printer (31) and read out at a speed, which is equal to or smaller than the maximum printing speed, by way of a driver circuit controlled by the computer control unit (1) for the direct driving of the point matrix of the printer (31).

10. Circuit arrangement according to claim 9, characterised thereby, that the point store (8) is blocked for the reception of new data during the reading out of the data and that the characters of the text information of the next page are filed in addressed manner in the point-oriented data store only after issue of a control command by way of the computer control equipment during the vertical black-out time.

11. Circuit arrangement according to claim 9 or 10, characterised thereby, that the point store (8) is connected with a multiplex circuit, by way of which the data filed in the point stored (8) are entered line by line into a data store of the printer control equipment (30) at the writing frequency of the electron beam of the image tube and read out for a driver circuit at the writing frequency of the printer.

## Revendications

1. Montage électronique pour la représentation de textes, graphiques et symboles sur l'écran d'un moniteur ou d'un récepteur de télévision en couleur et pour transmettre les informations aux périphériques tels que des imprimantes, dans lequel les informations reçues sont emmagasinées page par page dans une mémoire de page (3) et où, pour chaque point d'un signe à représenter, l'adresse de l'endroit sur l'écran est recherchée par une unité de commande à ordinateur (1) au moyen d'une mémoire de signes à lecture et effaçable et l'information de représentation de point est stockée dans une mémoire de données sous l'adresse recherchée et déterminée et les données de couleur associées à un signe sont introduites dans une mémoire d'attributs (6), les points et les données de couleur étant extraits par un dispositif de commande (7) et, combinés entre eux, transformés dans un circuit de production de signaux vidéo (transformés en signaux vidéo reproductibles sur l'écran) ou transmis aux périphériques, caractérisé par les traits caractéristiques suivants:

dans la mémoire de page (3) (RAM), les données des informations de texte codées reçues par page sont stockées de façon à pouvoir être extraites sous la commande de l'unité de commande à ordinateur (1);

dans une mémoire de signes (2) (ROM), prévue à titre de mémoire de programme, les données codées de tous les signes pouvant être représentés sont mémorisées de façon ineffaçable;

l'unité de commande à ordinateur (1) extrait de la mémoire de page les données de l'information de texte de chaque emplacement ou adresse d'un signe et détermine les données concernant un point de représentation particulier d'un signe en accédant à la mémoire de signes (2), et transmet ces données, avec l'adresse correspondante pour le lieu de représentation sur l'écran, par l'intermédiaire d'un bus d'adresses et de données (A, B);

les données relatives aux point sont enregistrées par l'unité de commande à ordinateur (1) dans une mémoire de points (8) prévue sous la forme d'une mémoire à image complète, sous l'adresse correspondant à l'emplacement du signe, pendant le temps de suppression verticale au moment de la représentation par lignes du texte sur l'écran, les données relatives aux points étant des fonctions de commutation et/ou des adresses de couleur correspondant aux points pour la logique placée en aval;

les attributs concernant la couleur et la représentation, par exemple, couleurs de premier plan et de fond, DRCS à couleurs multiples ou affichage clignotant, associés à chaque emplacement de signe, sont déterminés par l'unité de commande à ordinateur (1) sur la base des informations de page et, en même temps stockés dans une mémoire d'attributs (6);

les données contenues dans la mémoire de points (8) et dans la mémoire d'attributs (6) sont les adresses pour une mémoire de couleurs (16, 17) placée en aval;

le dispositif de commande (7) extrait les données contenues dans la mémoire de points dynamique (8) et la mémoire d'attributs qui sont adressées et synchronisées avec la déviation du faisceau électronique du tube cathodique (1) ou avec la vitesse de travail du périphérique et transmet ces données, par l'intermédiaire de registres à décalage de points (11, 12) associés aux mémoires (6, 8) à un circuit multiplexeur (15) qui peut être commuté aussi bien par les fonctions de commutation stockées dans la mémoire de points que par les attributs relatifs aux emplacements des signes contenus dans la mémoire d'attributs, de telle manière qu'une fonction de commutation pour un point de représentation commute le multiplexeur (15) et appelle de la mémoire de couleurs (16, 17) les couleurs de premier plan, et de fond et éventuellement les informations de représentation stockées dans la mémoire d'attributs (6) sous l'adresse correspondante, et de telle manière que le multiplexeur (15) commute en outre en fonction d'une information de représentation de couleurs multiples ou autre information de représentation relative aux points qui est stockée dans la mémoire d'attributs (6) et transmet à la mémoire de couleurs (16, 17) placée en aval les données de couleurs et de représentation relatives aux points, stockées dans la mémoire de points sous la même adresse d'emplacement de signe et appelle les informations de couleurs correspondantes; et

l'unité de commande (7) émet les données de couleurs relatives aux points qui ont été déterminées et les envoie, soit dans une mémoire à sélection matricielle (18) et à un transducteur numérique intégré, dans lequel les signaux RGB peuvent être pris pour la commande du tube cathodique, soit à la sortie, sous la forme d'une information relative aux points pour les périphériques.

2. Montage électronique selon la revendication 1 pour la représentation en couleurs des signes sans attributs particuliers associés aux blocs de signes, caractérisé en ce que, exclusivement seules, les données associées aux différents points des signes, qui sont stockées dans la mémoire de points dynamique (8) appellent les informations de couleurs adressées de la mémoire de couleurs (16, 17) par l'intermédiaire du dispositif de commande.

3. Montage électronique selon l'une des revendications 1 ou 2, destiné à la représentation des signes sur un affichage qui peut être commandé par lignes et par colonnes, caractérisé en ce que les informations extraites de la mémoire de couleurs (16) sont envoyées par l'intermédiaire de l'unité de commande (7) aux entrées d'affichage sous l'adresse relative aux points.

4. Montage électronique selon la revendication 1, caractérisé en ce qu'il est prévu une mémoire de couleurs (16, 17) comportant plusieurs zones dans lesquelles les couleurs de premier plan et de fond ainsi que les attributs de représentation sont stockés séparément et en ce que les données sont extraites par l'unité de commande (7) par l'intermédiaire d'un autre circuit multiplexeur (19) et transmises à la mémoire à sélection matricielle (18).

5. Montage électronique selon l'une des revendications précédentes, caractérisé en ce qu'il est prévu une mémoire d'adressage additionnelle (9) (RAM statique) dans laquelle les adresses déterminées pour l'emplacement du signe sont stockées par blocs et en ce que ces adresses forment les adresses pour chaque emplacement de signe d'une ligne de représentation et les adresses pour les attributs associés à l'emplacement de signes, qui adressent les zones de mémoire et les emplacements de mémoire des mémoires de points et d'attributs (6, 8) par l'intermédiaire d'une mémoire tampon (22).

6. Montage électronique selon l'une des revendications précédentes, caractérisé en ce que, pour activer les mémoires de points, d'attributs et d'adresses (6, 8, 9), il est prévu un secteur de puce (4) et les données sont enregistrées dans les mémoires de points (8) et d'attributs (6) par l'intermédiaire d'un multiplexeur (5) commandé par l'unité de commande à ordinateur (1).

7. Montage électronique selon la revendication 5, caractérisé en ce que, pour ce qu'on appelle le procédé Scrolling, dans lequel différentes rangées de blocs de lignes sont échangées et remplacées constamment par de nouvelles rangées de blocs de lignes sans que, dans cette opération, le reste du contenu de l'information de texte ne soit modifié, les nouveaux signes sont stockés avec un adressage correspondant dans la mémoire d'adressage (9) qui effectue le transadressage dans la mémoire d'attributs et de points, conformément à l'adresse déterminée par l'unité de commande à ordinateur (1) ou par l'unité de commande (7), les données relatives à des points qui leur correspondent dans la mémoire de points (8) et les attributs dans la mémoire d'attributs (6) étant remplacés par de nouveaux uniquement sous l'adresse correspondante.

8. Montage électronique selon la revendication 2, caractérisé en ce que comme mémoire de répétition d'images on utilise uniquement la mémoire de points dynamique (8) et en ce que les informations contenues dans la mémoire de points sont introduites dans la mémoire de couleurs par l'intermédiaire d'un registre à décalage de points, puis extraites par un multiplexeur (19) commandé par l'unité de commande (7).

9. Montage électronique pour la représentation en image de textes, graphiques et symboles, au moyen des imprimantes commandées par points, par exemple, une imprimante thermique, à aiguilles ou à jet d'encre, selon la revendication 1 ou l'une des revendications 2 à 8, caractérisé en ce que les données relatives aux points de la mémoire de couleurs (16, 17) ou les données de chaque point de signe contenues dans la mémoire de points (8) sont enregistrées par lignes sous forme adressée, par un bus d'adresses, dans une mémoire de données appartenant à un autre dispositif de commande (30) servant à commander l'imprimante (31), sous une adresse relative à un point fournie par le dispositif de commande à ordinateur (1), et sont extraites par l'intermédiaire d'un circuit d'attaque de driver commandé par le dispositif de commande à ordinateur (1), pour l'accès direct à la matrice de points de l'imprimante (31) avec une vitesse qui est égale ou inférieure à la vitesse d'impression maximale.

10. Montage électronique selon la revendication 9, caractérisé en ce que, pendant l'extraction des données, la mémoire de points (8) est bloquée pour l'acceptation de nouvelles données et en ce que ce n'est que sous l'effet de l'émission d'un ordre de commande par l'intermédiaire du dispositif de commande à ordinateur, pendant le temps de suppression verticale, que les signes de l'information de texte de la page suivante sont introduites sous forme adressée dans la mémoire de données relative aux points.

11. Montage électronique selon la revendication 9 ou 10, caractérisé en ce que la mémoire de points (8) est reliée à un circuit multiplexeur par l'intermédiaire duquel les données stockées dans la mémoire de points (8) sont enregistrées par lignes, avec la fréquence d'écriture du faisceau électronique du tube cathodique, dans une mémoire de données du dispositif (3) de commande de l'imprimante et sont extraites pour un circuit d'attaque, avec la fréquence d'écriture de l'imprimante.

Fig. 1

Fig. 2

Fig. 3